# EUROPEAN PATENT APPLICATION

(11) **EP 1 841 125 A1**
(43) Date of publication of application: **03.10.2007**
(21) Application number: 06006982.0
(22) Date of filing: 31.03.2006
(51) Int. Cl.: H04L 9/32, H04L 9/08

(54) **Communications system and method**

(71) Applicant: Tzou, May, Taichung City (TW)
(72) Inventor: Wu, Sam, Taichung City (TW); Trzaskowski, Michal, 10-689 Olsztyn (PL); Kiszkiel, Urszula, 15-667 Bialystok (PL); Trzaskowski, Czeslaw, 10-689 Olsztyn (PL); Hillar, Tomasz, 82-300 Elbl G (PL)
(74) Representative: Leifert & Steffan

(57) **Abstract**

A communications system includes a transmitting device (60) for processing packets to be sent, and a receiving device (70) for processing the transmitted packets. The transmitting device (60) includes a first memory unit (61), a first communications unit (64), and a first processing unit (65) coupled therebetween. The first processing unit (65) is operable so as to compose an initial packet segment, encrypt the initial packet segment, form a transmit packet, and enable the first communications unit (64) to transmit the transmit packet. The receiving device (70) includes a second communications unit (72), a second memory unit (71), and a second processing unit (73) coupled therebetween. The second processing unit (73) is operable so as to determine if there is any error in the transmit packet, decrypt the encrypted packet segment of the transmit packet, verify the transmit packet, and process the data transmitted in the transmit packet.

## Description

The present invention relates to a communications system and method, more particularly to a communications system and method used in wireless remote control.

A conventional transmitting device used to control a receiving device associated with a remote-controlled system (for example, an electric door system) employs simple passive elements. As a result, the conventional transmitting device has limited functionality, and can perform only one-way communications, that is, there is no hardware or software configuration to allow for data transmitted back to the transmitting device by the receiving device to be received by the transmitting device. With only one-way communications available, therefore, systems controlled by the conventional transmitting device must be visually checked by the user in order to ascertain the state or operating mode thereof. As an example, the user must visually verify whether or not a garage door associated with the receiving device has been completely closed. This may lead to situations in which the remote-controlled system has not been controlled as desired, and the user is unaware of this fact.

An increasing number of remote-controlled systems are being interfaced with personal computers (PCs) in order to increase functionality of the devices. A security monitoring apparatus is an example of such a system. However, this has caused additional problems with regard to communications between the devices and PCs. In addition, since there are copy transmission issues associated with current radio transmission protocols, the devices are vulnerable to security breaches. That is, by compiling a large amount of data and analyzing the same, the code of the conventional communications protocol may be broken in a relatively short amount of time. Further, packets may be copied to gain unauthorized access to the device to start or activate the same (e.g., open a garage door), thereby additionally reducing the security of the system.

Therefore, the object of the present invention is to provide a communications method that increases security, and that may be applied to both one- and two-way communications.

Another obj ect of the present invention is to provide a communications system that is highly secure, and that can perform both one- and two-way communications.

According to one aspect, the communications method of this invention is implemented by transmitting and receiving devices in a communications system, and the communications method comprises a basic send transmission procedure to be performed by the transmitting device for processing packets to be sent to the receiving device, and a basic receive transmission procedure to be performed by the receiving device for processing the packets received from the transmitting device.

The basic send transmission procedure includes: a) composing an initial packet segment that includes data to be transmitted, a device identification code of the transmitting device, a copy protection code, and a network identification code; b) generating an encryption key, selecting a first coding value from a first hash table according to the encryption key, and encrypting the initial packet segment composed in step a) according to the first coding value thus selected to result in an encrypted packet segment; c) generating an error detection code, and forming a transmit packet that includes the encryption key, the encrypted packet segment, and the error detection code; and d) transmitting the transmit packet.

The basic receive transmission procedure includes: e) receiving the transmit packet transmitted by the transmitting device; f) inspecting the error detection code in the transmit packet to determine if there is any error in the transmit packet; g) if there is no error in the transmit packet, using the encrypt ion key to select a second coding value from a second hash table identical to the first hash table, and decrypting the encrypted packet segment of the transmit packet using the second coding value thus selected to obtain the initial packet segment composed by the transmitting device; h) verifying the transmit packet by inspecting the network identification code and the copy protection code; and i) processing the data transmitted in the transmit packet upon successful verification of the transmit packet.

According to another aspect of this invention, the communications system comprises a transmitting device for processing packets to be sent, and a receiving device for processing the packets received from the transmitting device.

The transmitting device includes: a first memory unit for storing a device identification code assigned to the transmitting device, and a first hash table; a first communications unit; and a first processing unit coupled to the first memory unit and the first communications unit.

The first processing unit is operable so as to compose an initial packet segment that includes data to be transmitted, the device identification code of the transmitting device from the first memory unit, and a copy protection code.

The first processing unit is further operable so as to generate an encryption key, so as to select a first coding value from the first hash table according to the encryption key, and so as to encrypt the initial packet segment according to the first coding value thus selected to result in an encrypted packet segment.

The first processing unit is further operable so as to generate an error detection code, so as to form a transmit packet that includes the encryption key, the encrypted packet segment, and the error detection code, and so as to enable the first communications unit to transmit the transmit packet.

The receiving device includes: a second communications unit for receiving the transmit packet transmitted by the first communications unit of the transmitting device; a second memory unit for storing a second hash table, which is identical to the first hash table stored in the first memory unit, and the device identification code assigned to the transmitting device; and a second processing unit coupled to the second memory unit and the second communications unit.

The second processing unit is operable so as to inspect the error detection code in the transmit packet to determine if there is any error in the transmit packet.

The second processing unit is further operable so as to, if there is no error in the transmit packet, use the encryption key to select a second coding value from the second hash table, and so as to decrypt the encrypted packet segment of the transmit packet using the second coding value thus selected to obtain the initial packet segment composed by the transmitting device.

The second processing unit is further operable so as to verify the transmit packet by inspecting the copy protection code, and so as to process the data transmitted in the transmit packet upon successful verification of the transmit packet.

Other features and advantages of the present invention will become apparent in the following detailed description of the preferred embodiment with reference to the accompanying drawings, of which:
Fig. 1 is a flow chart of a basic send transmission procedure according to the preferred embodiment of the communications method of the present invention;
Fig. 2 is a flow chart of a basic receive transmission procedure according to the preferred embodiment of the communications method of the present invention;
Fig. 3 is a flow chart of a learning procedure applied in the preferred embodiment of the communications method of the present invention; and
Fig. 4 is a schematic block diagram of a communications system according to the preferred embodiment of the present invention.

A communications method according to a preferred embodiment of the present invention is implemented by transmitting and receiving devices in a communications system. As an example, the transmitting device is a remote transmitting device, and the receiving device is adapted to control operation of an electric door system. The communications method includes a basic send transmission procedure, a basic receive transmission procedure, and a learning procedure. The basic send transmission procedure is performed by the transmitting device for processing packets to be sent to the receiving device. The basic receive transmission procedure is performed by the receiving device for processing the packets received from the transmitting device. The learning procedure allows for addition of a new transmitting device to the communications system.

It is to be noted that a number of duplicate packets may be transmitted at one time to thereby reduce information loss caused by noise. As an example, three duplicate packets may be transmitted at one time, in which the three packets are preceded by a start signal, and two separator signals are respectively positioned between two adjacent packets to thereby separate the packets.

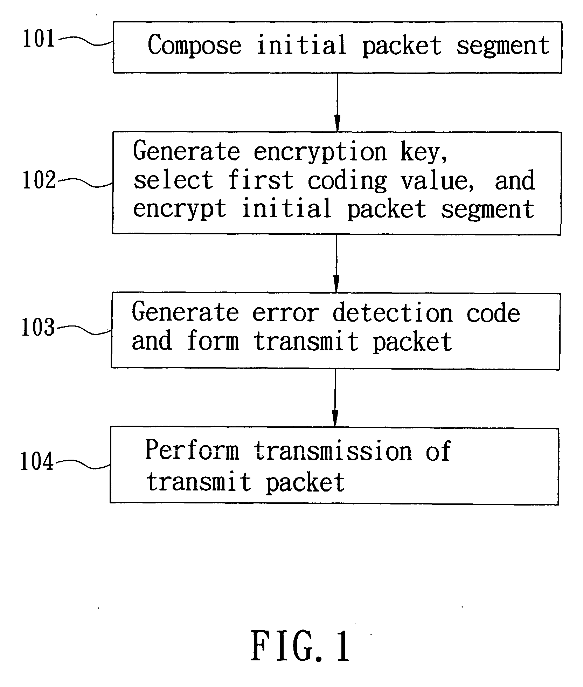

The processes involved in the basic send transmission procedure will now be described with reference to Fig. 1.

In step 101 of the basic send transmission procedure, an initial packet segment is composed and includes data to be transmitted, a device identification code of the transmitting device, a copy protection code, and a network identification code.

In step 102, an encryption key is generated, a first codingvalue is selected from a first hash table according to the encryption key, and the initial packet segment composed in step 101 is encrypted according to the first coding value thus selected to result in an encrypted packet segment.

In step 103, an error detection code is generated, and a transmit packet is formed and includes the encryption key, the encrypted packet segment, and the error detection code.

In step 104, the transmit packet is transmitted.

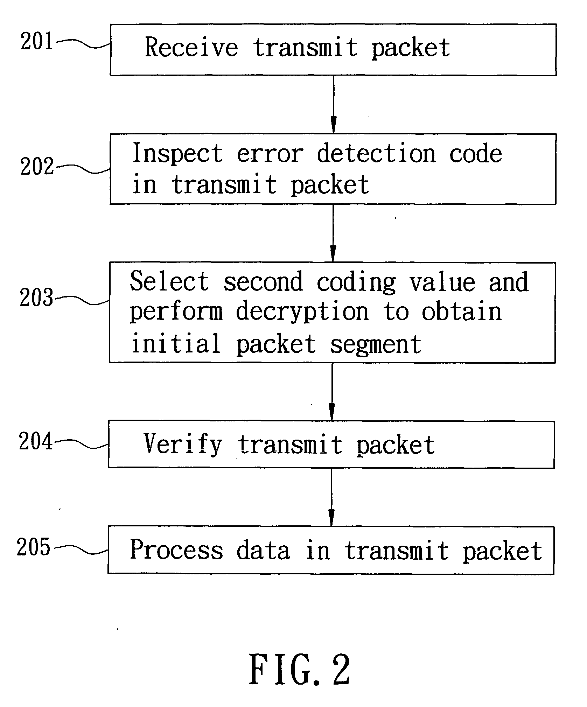

The processes involved in the basic receive transmission procedure will now be described with reference to Fig. 2.

In step 201 of the basic receive transmission procedure, the transmit packet transmitted by the transmitting device is received.

In step 202, the error detection code in the transmit packet is inspected to determine if there is any error in the transmit packet.

In step 203, if there is no error in the transmit packet, the encryption key is used to select a second coding value from a second hash table identical to the first hash table, and the encrypted packet segment of the transmit packet is decrypted using the second coding value thus selected to obtain the initial packet segment composed by the transmitting device.

In step 204, the transmit packet is verified by inspecting the network identification code and the copy protection code.

In step 205, the data transmitted in the transmit packet is processed upon successful verification of the transmit packet.

Preferably, in step 101 of the basic send transmission procedure, a first transmission number corresponding to a previous transaction with the receiving device is incremented to obtain a second transmission number, and the copy protection code is generated as a function of the second transmission number. In addition, in step 204 of the basic receive transmission procedure, a third transmission number is generated from the copy protection code in the transmit packet, is compared with a recorded transmission number to verify the transmit packet, and is used to update the recorded transmission number upon successful verification of the transmit packet.

Preferably, in step 101 of the basic send transmission procedure, the initial packet segment further includes a label, and in step 204 of the basic receive transmission procedure, the third transmission number as well as the device identification code and the label in the transmit packet are concurrently inspected when verifying the transmit packet.

Preferably, in step 101 of the basic send transmission procedure, the copy protection code is equivalent to the second transmission number, and in step 204 of the basic receive transmission procedure, the third transmission number is equivalent to the copyprotection code.

Alternatively, in step 101 of the basic send transmission procedure, a function which is monotonic and unequivocal in number interval is used to convert the second transmission number into the copy protection code. In this case, a reverse function of the function used in step 101 is used to convert the copy protection code into the third transmission number in step 204 of the basic receive transmission procedure.

Preferably, in step 101 of the basic send transmission procedure, the network identification code is a static value assigned to a network used by the transmitting device and the receiving device, and in step 204 of the basic receive transmission procedure, the network identification code in the transmit packet and the static value are compared to verify the transmit packet. In this case, successful verification of step 204 is deemed to have occurred if the network identification code in the transmit packet and the static value are equal.

Alternatively, in step 101 of the basic send transmission procedure,the networkidentification code is obtained through dynamic calculation of data in the initial packet segment, and in step 204 of the basic receive transmission procedure, a dynamic value is dynamically calculated from data in the initial packet segment (excluding the network identification code), and the network identification code and the dynamic value are compared to verify the transmit packet. In this instance, however, successful verification of step 204 is deemed to have occurred if the network identification code and the dynamic value are equal.

Preferably, in step 102 of the basic send transmission procedure, the encrypted packet segment is scrambled to result in an encrypted and scrambled packet segment that is used to form the transmit packet in step 103. Further, in step 203 of the basic receive transmission procedure, the encrypted and scrambled packet segment is descrambled to obtain the encrypted packet segment of the transmit packet, after which the encrypted packet segment is decrypted using the second coding value.

Preferably, in step 103 of the basic send transmission procedure, the transmit packet further includes a device type code assigned to the transmitting device and the receiving device, and in step 202 of the basic receive transmission procedure, the device type code in the transmit packet is further inspected and verified prior to decrypting the transmit packet in step 203.

Preferably, in step 103 of the basic send transmission procedure, the error detection code is equivalent to a control sum of the encryption key and the encrypted packet segment in the transmit packet. Further, in step 202 of the basic receive transmission procedure, the error detection code is compared with the control sum of the encryption key and the encrypted packet segment of the transmit packet to inspect the error detection code. The error detection code is deemed to be correct if the error detection code is equal to the control sum.

Preferably, in step 204 of the basic receive transmission procedure, the third transmission number is deemed accurate if the third transmission number is larger than the recorded transmission number corresponding to the device identification code in the transmit packet.

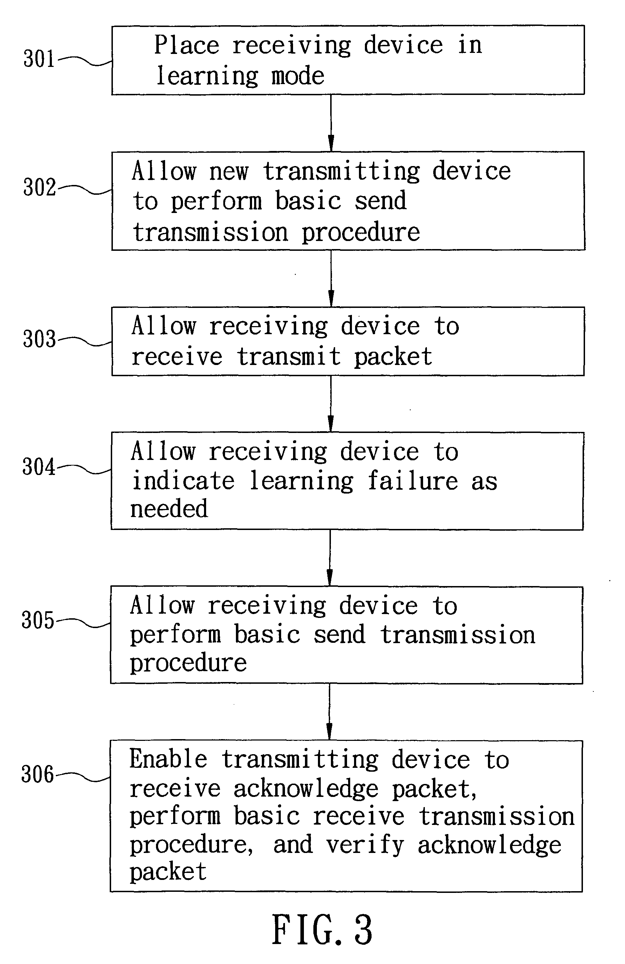

The processes involved in the learning procedure will now be described with reference to Fig. 3. The learning procedure is used to allow for the addition of a new transmitting device (not shown) as described above.

In step 301 of the learning procedure, the receiving device is placed in a learning mode. In step 302, control is performed to allow the new transmitting device to perform the basic send transmission procedure so that the new transmitting device transmits a to-be-learned transmit packet. In step 303, control is performed to allow the receiving device to receive the transmit packet, and to perform steps 202-204 of the basic receive transmission procedure. In step 304, control is performed to allow the receiving device to indicate learning failure if any one of the error detection code and the network identification code is inaccurate.

Referring again to Fig. 3, the learning procedure may include additional steps to allow for two-way communications.

In step 305, control is performed to allow the receiving device to perform the basic send transmission procedure so that an acknowledge packet, that includes an acknowledge signal and an error signal in the case of learning failure, is transmitted.

In step 306, control is performed to enable the transmitting device 60 to receive the acknowledge packet, to perform the basic receive transmission procedure, and to inspect the device identification code to verify the acknowledge packet. At this time, step 302 of the learning procedure is performed if there is unsuccessful verification of the acknowledge packet, or if upon inspecting the error detection code in step 202 of the basic receive transmission procedure it is determined that there is an error in the acknowledge packet.

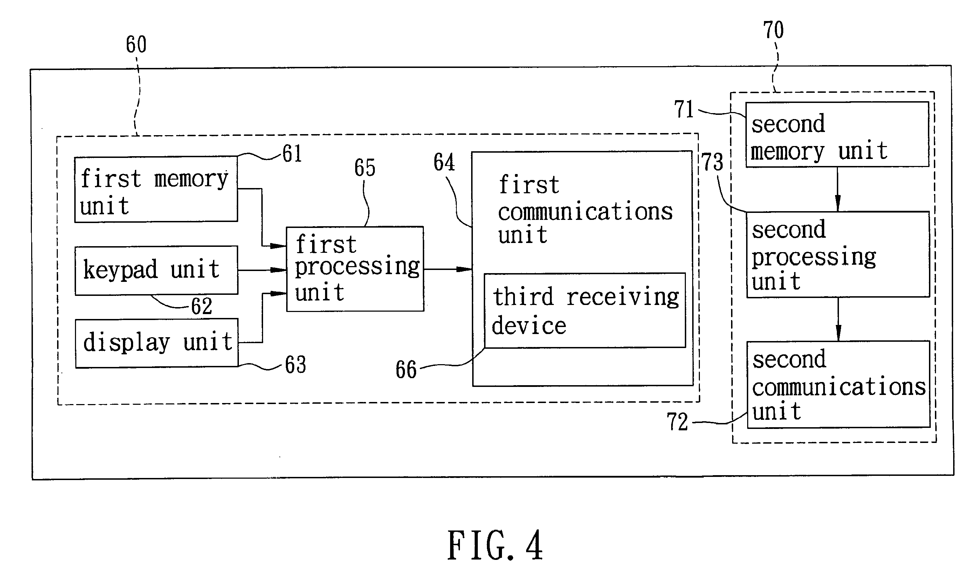

Referring to Fig. 4, a communications system according to a preferred embodiment of the present invention is shown to include a transmitting device 60 for processing packets to be sent, and a first receiving device 70 for processing the packets received from the transmitting device 60.

The transmitting device 60 includes a first memory unit 61 for storing a device identification code assigned to the transmitting device 60, and a first hash table. The transmitting device 60 further includes a first communications unit 64, and a first processing unit 65 coupled to the first memory unit 61 and the first communications unit 64.

The first processing unit 65 is operable so as to compose an initial packet segment that includes data to be transmitted, the device identification code of the transmitting device 60 from the first memory unit 61, and a copy protection code.

The first processing unit 65 is further operable so as to generate an encryption key, so as to select a first coding value from the first hash table according to the encryption key, and so as to encrypt the initial packet segment according to the first coding value thus selected to result in an encrypted packet segment.

The first processing unit 65 is additionally operable so as to generate an error detection code, so as to form a transmit packet that includes the encryption key, the encrypted packet segment, and the error detection code, and so as to enable the first communications unit 64 to transmit the transmit packet.

The first receiving device 70 includes a second communications unit 72 for receiving the transmit packet transmitted by the first communications unit 64 of the transmitting device 60. The first receiving device 70 further includes a second memory unit 71 for storing a second hash table, which is identical to the first hash table stored in the first memory unit 61, and the device identification code assigned to the transmitting device 60, and a second processing unit 73 coupled to the second memory unit 71 and the second communications unit 72.

The second processing unit 73 is operable so as to inspect the error detection code in the transmit packet to determine if there is any error in the transmit packet.

The second processing unit 73 is further operable so as to, if there is no error in the transmit packet, use the encryption key to select a second coding value from the second hash table, and so as to decrypt the encrypted packet segment of the transmit packet using the second coding value thus selected to obtain the initial packet segment composed by the transmitting device 60.

The second processing unit 73 is additionally operable so as to verify the transmit packet by inspecting the copy protection code, and so as to process the data transmitted in the transmit packet upon successful verification of the transmit packet.

In the preferred embodiment, the first memory unit 61 further stores a first transmission number corresponding to a previous transaction between the transmitting device 60 and the first receiving device 70. The first processing unit 65 is further operable so as to increment the first transmission number to obtain a second transmission number, and so as to generate the copy protection code as a function of the second transmission number. Furthermore, the second memory unit 71 further stores a recorded transmission number, and the second processing unit 73 is further operable so as to generate a third transmission number from the copy protection code in the transmit packet, so as to compare the third transmission number with the recorded transmission number from the second memory unit 71 to verify the transmit packet, and so as to update the recorded transmission number using the third transmission number upon successful verification of the transmit packet.

In the preferred embodiment, the second processing unit 73 of the first receiving device 70 is further operable so as to forman acknowledge packet that includes an acknowledge signal following processing of the data transmitted in the transmit packet, and the second communications unit 72 of the first receiving device 70 transmits externally the acknowledge packet. In addition, the transmitting device 60 further includes a display unit 63, and the first communications unit 64 of the transmitting device 60 has a third receiving device 66 for receiving the acknowledge packet. With this configuration, the first processing unit 65 of the transmitting device 60 is further operable so as to process the acknowledge signal in the acknowledge packet obtained from the first receiving device 70, and so as to display the acknowledge signal of the first receiving device 70 on the display unit 63.

In one embodiment, the communications system further includes a second receiving device (not shown) having a third memory unit and a third processing unit, and the first memory unit 61 of the transmitting device 60 further stores a pair of labels assigned respectively to the first receiving device 70 and the second receiving device. In addition, the initial packet segment composed by the first processing unit 65 of the transmitting device 60 further includes the label of a designated one of the first receiving device 70 and the second receiving device, and the second memory unit 71 of the first receiving device 70 and the third memory unit of the second receiving device respectively store the labels assigned thereto.

Furthermore, in this embodiment, the second processing unit 73 of the first receiving device 70 and the third processing unit of the second receiving device are further operable so as to inspect concurrently the third transmission number as well as the device identification code and the label in the transmit packet when verifying the transmit packet.

The transmitting device 60 may further include a keypad unit 62 having a channel button and a mode button. In this case, the first processing unit 65 of the transmitting device 60 designates one of the first receiving device 70 and the second receiving device according to user manipulation of the channel button of the keypad unit 62 (e.g., the number of times the channel button of the keypad unit 62 is depressed), and determines the data to be transmitted according to user manipulation of the mode button of the keypad unit 62 (e.g., the number of times the mode button of the keypad unit 62 is depressed).

Such control as described above may also be used such that the transmitting device 60 is used in conjunction with multiple receiving devices (i.e., more than two).

From the aforementioned, the communications system and method of the present invention allows for both one-and two-way communications. Furthermore, through encryption and scrambling, and use of hash tables and transmission numbers, packets including the same information to be transmitted may vary each time a transmission takes place, thereby making duplication difficult and increasing security. Hence, the objects of the present invention are achieved.

## Claims

1. A communications method to be implemented by transmitting and receiving devices (60,70) in a communications system, saidcommunicationsmethodbeing **characterized by** a basic send transmission procedure to be performed by the transmitting device (60) for processing packets to be sent to the receiving device (70), and a basic receive transmission procedure to be performed by the receiving device (70) for processing the packets received from the transmitting device (60),
**characterized in that** said basic send transmission procedure includes:
a) composing an initial packet segment that includes data to be transmitted, a device identification code of the transmitting device (60), a copy protection code, and a network identification code,
b) generating an encryption key, selecting a first coding value from a first hash table according to the encryption key, and encrypting the initial packet segment composed in step a) according to the first coding value thus selected to result in an encrypted packet segment,
c) generating an error detection code, and forming a transmit packet that includes the encryption key, the encrypted packet segment, and the error detection code, and
d) transmitting the transmit packet; and
**characterized in that** said basic receive transmission procedure includes:
e) receiving the transmit packet transmitted by the transmitting device (60),
f) inspecting the error detection code in the transmit packet to determine if there is any error in the transmit packet,
g) if there is no error in the transmit packet, using the encryption key to select a second coding value from a second hash table identical to the first hash table, and decrypting the encrypted packet segment of the transmit packet using the second coding value thus selected to obtain the initial packet segment composed by the transmitting device (60),
h) verifying the transmit packet by inspecting the network identification code and the copy protection code, and
i) processing the data transmitted in the transmit packet upon successful verification of the transmit packet.

2. The communications method as claimed in Claim 1, **characterized in that**:
in step a) of said basic send transmission procedure, a first transmission number corresponding to a previous transaction with the receiving device (70) is incremented to obtain a second transmission number, and the copy protection code is generated as a function of the second transmission number; and
in step h) of said basic receive transmission procedure, a third transmission number is generated from the copy protection code in the transmit packet, is compared with a recorded transmission number to verify the transmit packet, and is used to update the recorded transmission number upon successful verification of the transmit packet.

3. The communications method as claimed in Claim 2, **characterized in that**:
in step a) of said basic send transmission procedure, the initial packet segment further includes a label; and
in step h) of said basic receive transmission procedure, the third transmission number as well as the device identification code and the label in the transmit packet are concurrently inspected when verifying the transmit packet.

4. The communications method as claimed in Claim 2, **characterized in that**:
in step a) of said basic send transmission procedure, the copy protection code is equivalent to the second transmission number; and
in step h) of said basic receive transmission procedure, the third transmission number is equivalent to the copy protection number.

5. The communications method as claimed in Claim 2, **characterized in that**:
in step a) of said basic send transmission procedure, a function which is monotonic and unequivocal in number interval is used to convert the second transmission number into the copy protection code; and
in step h) of said basic receive transmission procedure, a reverse function of the function used in step a) is used to convert the copy protection code into the third transmission number.

6. The communications method as claimed in Claim 1, **characterized in that**:
in step a) of said basic send transmission procedure, the network identification code is a static value assigned to a network used by the transmitting device (60) and the receiving device (70).

7. The communications method as claimed in Claim 1, **characterized in that**:
in step a) of said basic send transmission procedure, the network identification code is obtained through dynamic calculation of data in the initial packet segment.

8. The communications method as claimed in Claim 1, **characterized in that**:
in step b) of said basic send transmission procedure, the encrypted packet segment is scrambled to result in an encrypted and scrambled packet segment that is used to form the transmit packet in step c); and
in step g) of said basic receive transmission procedure, the encrypted and scrambled packet segment is descrambled to obtain the encrypted packet segment of the transmit packet, after which the encrypted packet segment is decrypted using the second coding value.

9. The communications method as claimed in Claim 1, **characterized in that**:
in step c) of said basic send transmission procedure, the transmit packet further includes a device type code assigned to the transmitting device (60) and the receiving device (70); and
in step f) of said basic receive transmission procedure, the device type code in the transmit packet is further inspected and verified prior to decrypting the transmit packet in step g).

10. The communications method as claimed in Claim 1, **characterized in that**:
in step c) of said basic send transmission procedure, the error detection code is equivalent to a control sum of the encryption key and the encrypted packet segment in the transmit packet.

11. The communications method as claimed in Claim 2, **characterized in that**: in step h) of said basic receive transmission procedure, the third transmission number is deemed accurate if the third transmission number is larger than the recorded transmission number corresponding to the device identification code in the transmit packet.

12. The communications method as claimed in Claim 1, further **characterized by** a learning procedure for allowing addition of a new transmitting device to the communications system,
**characterized in that** said learning procedure includes:
j) placing the receiving device (70) in a learning mode,
k) enabling the new transmitting device to perform said basic send transmission procedure so that the new transmitting device transmits a to-be-learned transmit packet,
l) enabling the receiving device (70) to receive the transmit packet, and to perform steps f) through h) of said basic receive transmission procedure.

13. The communications method as claimed in Claim 12, **characterized in that** said learning procedure further includes:
m) enabling the receiving device (70) to indicate learning failure if any one of the error detection code and the network identification code is inaccurate.

14. A communications system **characterized by** a transmitting device (60) for processing packets to be sent, and a first receiving device (70) for processing the packets received from said transmitting device (60),
**characterized in that** said transmitting device (60) includes:
a first memory unit (61) for storing a device identification code assigned to said transmitting device (60), and a first hash table,
a first communications unit (64), and
a first processing unit (65) coupled to said first memory unit (61) and said first communications unit (64), said first processing unit (65) being operable so as to compose an initial packet segment that includes data to be transmitted, the device identification code of said transmitting device (60) from said first memory unit (61), and a copy protection code,
said first processing unit (65) being further operable so as to generate an encryption key, so as to select a first coding value from said first hash table according to the encryption key, and so as to encrypt the initial packet segment according to the first coding value thus selected to result in an encrypted packet segment,
said first processing unit (65) being further operable so as to generate an error detection code, so as to form a transmit packet that includes the encryption key, the encrypted packet segment, and the error detection code, and so as to enable said first communications unit (64) to transmit the transmit packet; and
**characterized in that** said first receiving device (70) includes:
a second communications unit (72) for receiving the transmit packet transmitted by said first communications unit (64) of said transmitting device (60),
a second memory unit (71) for storing a second hash table, which is identical to the first hash table stored in said first memory unit (61), and the device identification code assigned to said transmitting device (60), and
a second processing unit (73) coupled to said second memory unit (71) and said second communications unit (72), said second processing unit (73) being operable so as to inspect the error detection code in the transmit packet to determine if there is any error in the transmit packet,
said second processing unit (73) being further operable so as to, if there is no error in the transmit packet, use the encryption key to select a second coding value from the second hash table, and so as to decrypt the encrypted packet segment of the transmit packet using the second coding value thus selected to obtain the initial packet segment composed by said transmitting device (60),
said second processing unit (73) being further operable so as to verify the transmit packet by inspecting the copy protection code, and so as to process the data transmitted in the transmit packet upon successful verification of the transmit packet.

15. The communications system as claimed in Claim 14, **characterized in that** said first memory unit (61) further stores a first transmission number corresponding to a previous transaction between said transmitting device (60) and said first receiving device (70), said first processing unit (65) being further operable so as to increment the first transmission number to obtain a second transmission number, and so as to generate the copy protection code as a function of the second transmission number, said second memory unit (71) further storing a recorded transmission number, said second processing unit (73) being further operable so as to generate a third transmission number from the copy protection code in the transmit packet, so as to compare the third transmission number with the recorded transmission number from said second memory unit (71) to verify the transmit packet, and so as to update the recorded transmission number using the third transmission number upon successful verification of the transmit packet.

16. The communications system as claimed in Claim 15, further **characterized by** a second receiving device having a third memory unit and a third processing unit, said first memory unit (61) of said transmitting device (60) further storing a pair of labels assigned respectively to said first and second receiving devices (70) ;
the initial packet segment composed by said first processing unit (65) of said transmitting device (60) further including the label of a designated one of said first and second receiving devices (70);
said second memory unit (71) of said first receiving device (70) and said third memory unit of said second receiving device respectively storing the labels assigned thereto;
said second processing unit (73) of said first receiving device (70) and said third processing unit of said second receiving device being further operable so as to inspect concurrently the third transmission number as well as the device identification code and the label in the transmit packet when verifying the transmit packet.

17. The communications system as claimed in Claim 16, **characterized in that** said transmitting device (60) further includes a keypad unit (62), said keypad unit (62) having a channel button and a mode button, said first processing unit (65) of said transmitting device (60) designating one of said first and second receiving devices (70) according to user manipulation of said channel button of said keypad unit (62), and determining the data to be transmitted according to user manipulation of said mode button of said keypad unit (62).

18. The communications system as claimed in Claim 14, **characterized in that** said second processing unit (73) of said first receiving device (70) is further operable so as to forman acknowledge packet that includes an acknowledge signal following processing of the data transmitted in the transmit packet, said second communications unit (72) of said first receiving device (70) transmitting externally the acknowledge packet, said transmitting device (60) further including a display unit (63), said first communications unit (64) of said transmitting device (60) further having a third receiving device (66) for receiving the acknowledge packet, said first processing unit (65) of said transmitting device (60) being further operable so as to process the acknowledge signal in the acknowledge packet obtained from said first receiving device (70), and so as to display the acknowledge signal of said first receiving device (70) on said display unit (63).

19. The communications system as claimed in Claim 14, **characterized in that** said transmitting device (60) is a remote transmitting device (60), and said first receiving device (70) is adapted to control operation of an electric door system.

20. A transmitting device (60) to be implemented in a communications system, said transmitting device (60) being **characterized by**:
a memory unit (61) for storing a device identification code assigned to said transmitting device (60), and a hash table;
a communications unit (64); and
a processing unit (65) coupled to said memory unit (61) and said communications unit (64), said processing unit (65) being operable so as to compose an initial packet segment that includes data to be transmitted, the device identification code of said transmitting device (60) from said memory unit (61), and a copy protection code;
said processing unit (65) being further operable so as to generate an encryption key, so as to select a coding value from said hash table according to the encryption key, and so as to encrypt the initial packet segment according to the coding value thus selected to result in an encrypted packet segment;
said processing unit (65) being further operable so as to generate an error detection code, so as to form a transmit packet that includes the encryption key, the encrypted packet segment, and the error detection code, and so as to enable said communications unit (64) to transmit the transmit packet.

21. A receiving device (70) to be implemented in a communications system, the communications system including a transmitting device (60) for transmitting a transmit packet that includes an encryption key, an encrypted packet segment, and an error detection code, the encrypted packet segment being formed by the transmitting device (60) by encrypting an initial packet segment according to a first coding value from a first hash table stored in the transmitting device (60), the initial packet segment being composed by the transmitting device (60) to include data to be transmitted, a device identification code of the transmitting device (60), and a copy protection code, said receiving device (70) being **characterized by**:
a communications unit (72) for receiving the transmit packet transmitted by the transmitting device (60);
a memory unit (71) for storing a second hash table, which is identical to the first hash table stored in the transmitting device (60), and the device identification code of the transmitting device (60); and
a processing unit (73) coupled to said memory unit (71) and said communications unit (72), said processing unit (73) being operable so as to inspect the error detection code in the transmit packet to determine if there is any error in the transmit packet;
said processing unit (73) being further operable so as to, if there is no error in the transmit packet, use the encryption key to select a second coding value from the second hash table, and so as to decrypt the encrypted packet segment of the transmit packet using the second coding value thus selected to obtain the initial packet segment composed by the transmitting device (60);
said processing unit (73) being further operable so as to verify the transmit packet by inspecting the copy protectioncode, and so as to process the data transmitted in the transmit packet upon successful verification of the transmit packet.
